# EUROPEAN PATENT SPECIFICATION

(11) **EP 2 412 217 B1**
(45) Date of publication and mention of the grant of the patent: **05.12.2012**
(21) Application number: 11170796.4
(22) Date of filing: 21.06.2011
(51) Int. Cl.: A01B 33/16, A01B 51/02

(54) **Tilling machine**
Fliesmaschine
Machine de préparation du sol

(30) Priority: 30.07.2010 JP 2010172334
(43) Date of publication of application: 01.02.2012
(73) Proprietor: Honda Motor Co., Ltd., Tokyo 107-8556 (JP)
(72) Inventor: Kobayashi, Hideaki, Saitama, 351-0193 (JP); Yamada, Atsushi, Saitama, 351-0193 (JP); Akiyama, Masahiro, Saitama, 351-0193 (JP); Iino, Keiji, Saitama, 351-0193 (JP)
(74) Representative: Trossin, Hans-Jürgen

(56) References cited:
- DE-A1-102008 054 620
- JP-U- 58 068 803
- US-A- 3 807 506

## Description

The present invention relates to tilling machines which include drive shafts projecting leftward and rightward from a lower portion of a machine body, and in which rotors and wheels are detachably attachable to the projecting drive shafts.

Among the conventionally-known tilling machines are ones which cultivate soil with rotors attached to drive shafts and which are transferrable to a desired place by traveling on a road surface with wheels attached to the drive shafts in place of the rotors. In such tilling machines, a towing hitch (hereinafter referred to as "hitch member") extending rearward from a rear end portion of a machine body, and a plow support is provided on a rear end portion of the hitch member so that a plow is attached to a lower end portion of the plow support.

Further, a horizontal bar extends, in a width direction of the machine body (i.e., machine body width direction), from an intermediate portion (i.e., portion spaced rearward from the machine body) of the hitch member, and rotor support arms are provided on and extend upwardly from left and right end portions of the horizontal bar.

Left and right rotors can be supported on the left and right rotor support arms by rotation shafts of the rotors being fitted over the support arms. One example of such tilling machines is disclosed

When tilling operation is to be performed, the tilling machine disclosed in JP 58068803U can cultivate soil with the rotors attached to the drive shafts. When the tilling machines is to be transferred to a desired place, on the other hand, it can be transferred with the wheels attached to the drive shafts and with the rotors supported on the left and right rotor support arms.

Further, in the tilling machine disclosed in the relevant patent literature, where the rotor support arms are disposed in an intermediate portion (i.e., portion spaced rearward from the machine body) of the hitch member via the horizontal bar, the rotor support arms are located relatively close to grips of an operating handle of the tilling machine. Thus, when the rotors are supported on the rotor support arms, a weight of the rotors greatly acts on the handle grips as a downward load. Consequently, when a human operator supports the tilling machine in a transferring position by holding the grips and lifting the handle, a great handle lifting load would be imposed on the human operator, which tends to become an excessive burden on the human operator particularly at the time of long-distance transfer of the tilling machine.

Further, in the tilling machine disclosed in JP 58068803 U, the rotor support arms project upward from left and right end portions of the horizontal bar, and, with the rotors supported on the rotor support arms, the rotors are oriented vertically, so that upper end portions of the rotors would project upward beyond the operating handle, making it difficult to achieve a compact size of the tilling machine.

Furthermore, in the tilling machine disclosed in JP 58068803 U, the hitch member is connected at its front end portion to a rear portion of the hitch member via a connection member, and the rotor support arms project upward from the intermediate portion (i.e., portion spaced rearward from the machine body) of the hitch member via the horizontal bar, as noted above. Thus, the rotor support arms are spaced a considerable distance rearwardly from the connection member of the hitch member. Consequently, with the rotors supported on the rotor support arms, torsional deformation may easily occur in the hitch member so that the rotors cannot be supported in a stable manner.

In view of the foregoing prior art problems, it is an object of the present invention to provide an improved tilling machine which can achieve a reduced handle lifting load and compact size of the machine and can support rotors in a stable manner.

In order to accomplish the above-mentioned object, the present invention provides an improved tilling machine in accordance with claim 1. The tilling machine includes drive shafts projecting from a lower portion of a machine body leftward and rightward in a machine body width direction, and a handle column extending rearwardly from a rear portion of the machine body, and in which rotation shafts of rotors are detachably attachable to the drive shafts, which machine comprises: a support member provided on a rear portion of the machine body under the handle column and extending in the machine body width direction; and a pair of stud sections extending from left and right end portions, respectively, of the support member rearwardly of the machine body along the handle column, the rotation shafts of the rotors being fittable over corresponding ones of the stud sections.

With the aforementioned arrangements, the rotors can be provided close to the rear end of the machine body, and thus, the center-of-gravity position of the rotors can be located closer to the center-of-gravity position of the tilling machine. Thus, a handle lifting load imposed on a human operator when lifting an operating handle (left and right grips) to a machine-transferring position can be reduced; therefore, no great burden will be imposed on the human operator during long-distance transfer of the tilling machine.

Further, the stud sections extend rearwardly of the machine body along the handle column, and the rotation shaft of each of the rotors is fittable over the corresponding stud section. Thus, the rotors can be disposed along the handle column. As a result, it is possible to achieve a compact size of the tilling machine. Further, because the stud sections are provided on a rear portion of the machine body via the support member, each of the rotors can be supported stably on the rear portion of the machine body by the rotation shaft of the rotor being fitted over the corresponding stud section.

Here, the support member includes: a hitch mounting section provided on a rear portion of the machine body beneath the handle column; a pair of support sections extending from the hitch mounting section leftward and rightward in the machine body width direction; and a hitch member provided on the hitch mounting section and capable of connecting thereto a desired towed member, one of the stud sections being provided on one of the support sections, other of the stud sections being provided on other of the support sections. The hitch mounting section is a member secured to the rear portion of the machine body, and the support sections can be supported securely with a simple construction by merely being provided on such a hitch mounting section. In this way, it is possible to further reduce the handle lifting load, achieve an even more compact size of the tilling machine and allows the rotors to be supported in a more stable matter.

Preferably, each of the support sections includes a front wall portion located adjacent to the rear end of the machine body, and a rear wall portion provided perpendicularly to the handle column and spaced rearwardly from the front wall portion by a predetermined interval, and each of the stud sections is fixedly supported by the front wall portion and the rear wall portion. Each of the stud sections is supported by the two (rear and front) wall portions, and thus can be supported securely. In this way, the rotors can be supported more stably by the stud sections. Further, because the rear wall portion is provided perpendicularly to the handle column, the entire end surface of the rotation shaft of each of the rotors can be held in abutment against the rear wall portion of the corresponding support section, so that each of the right rotors fitted over the stud sections can be supported even more stably in a direction parallel to the handle column.

Preferably, a plurality of tilling claws are provided at predetermined uniform angular intervals on the rotation shaft of each of the rotors and project radially outwardly from the rotation shaft, and each of the stud sections is in a form of a polygonal column, each of the rotation shafts fittable over the stud sections having a fitting hole of a polygonal cross-sectional shape corresponding to the polygonal column. Further, the stud sections are provided in phase-shifted relation to each other so that the tilling claws of the rotor fitted over one of the stud sections can be disposed in such positions as to avoid interference with the tilling claws of the rotor fitted over the other of the stud sections. Thus, it is possible to reduce an interval or distance between the rotor fitted over one of the stud sections and the rotor fitted over the other of the stud sections, thereby allowing the rotors to be disposed compactly in the machine body width direction.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a side view showing an embodiment of a tilling machine according to the present invention, with wheels detachably attached to drive shafts of the tilling machine;
Fig. 2 is a top plan view of the tilling machine of Fig. 1;
Fig. 3 is a perspective view showing the tilling machine with rotors detachably attached to the drive shafts of the tilling machine;
Fig. 4 is a top plan view of the tilling machine, showing particularly the left and right rotors supported by a rotary/wheel support unit;
Fig. 5 is a sectional view taken along line 5 - 5 of Fig. 1;
Fig. 6 is a sectional view taken along line 6 - 6 of Fig. 1;
Fig. 7 is a view taken in a direction of arrow 7 of Fig. 1;
Fig. 8 is a plan view of the rotary/wheel support unit of Fig. 4;
Fig. 9 is a perspective view of the rotary/wheel support unit of Fig. 8;
Fig. 10 is an exploded perspective view showing the rotary/wheel support unit of Fig. 9;
Fig. 11 is a sectional view taken along line 11 - 11 of Fig. 4;
Fig. 12 is a view taken in a direction of arrow 12 of Fig. 4;
Fig. 13 is a plan view explanatory of a manner in which an engine of the tilling machine is activated; and
Fig. 14 is a side view of the tilling machine, showing particularly a ridger connected to a hitch member.

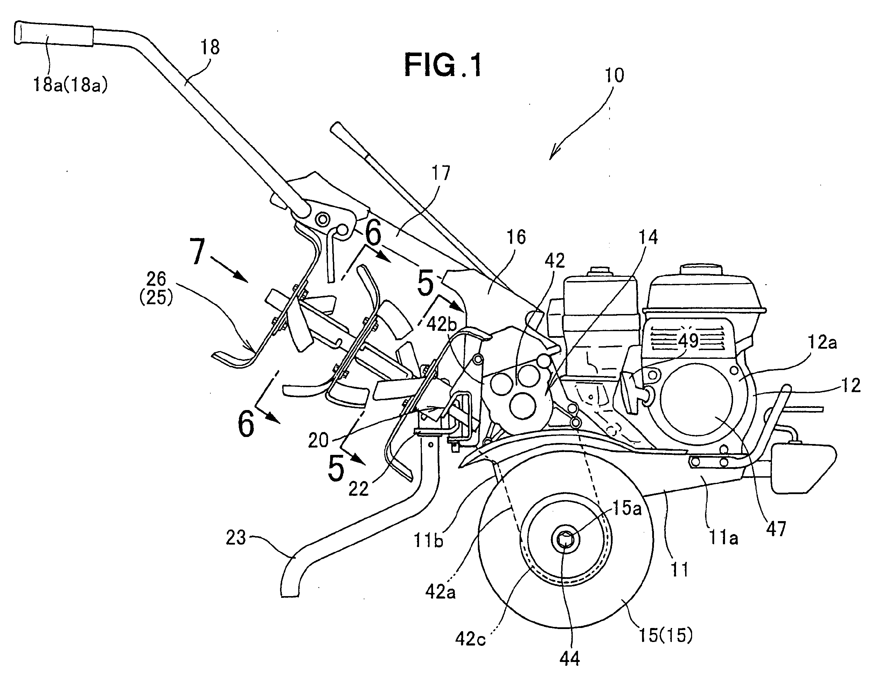

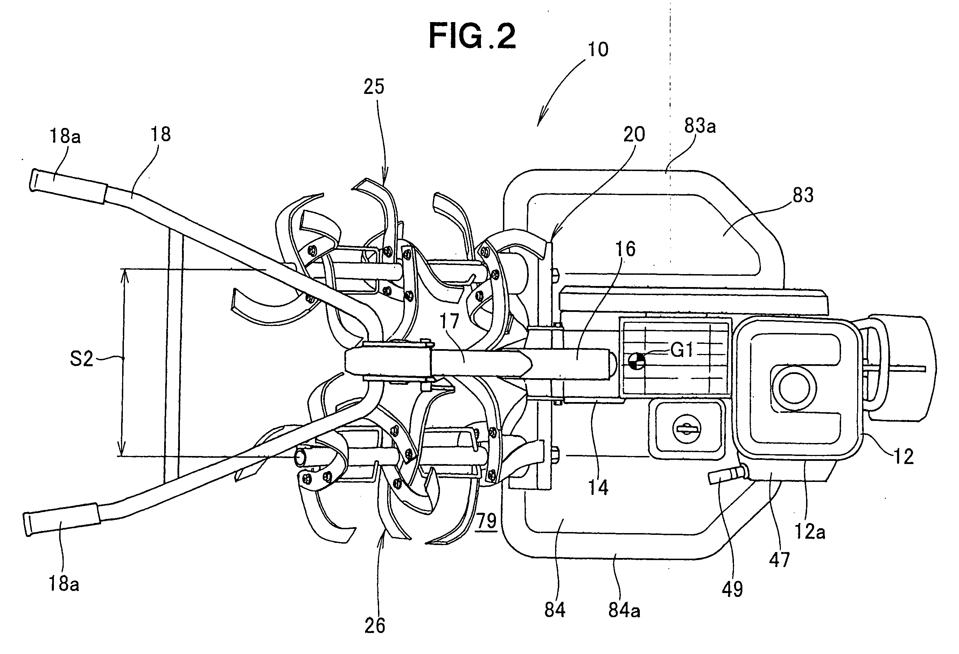

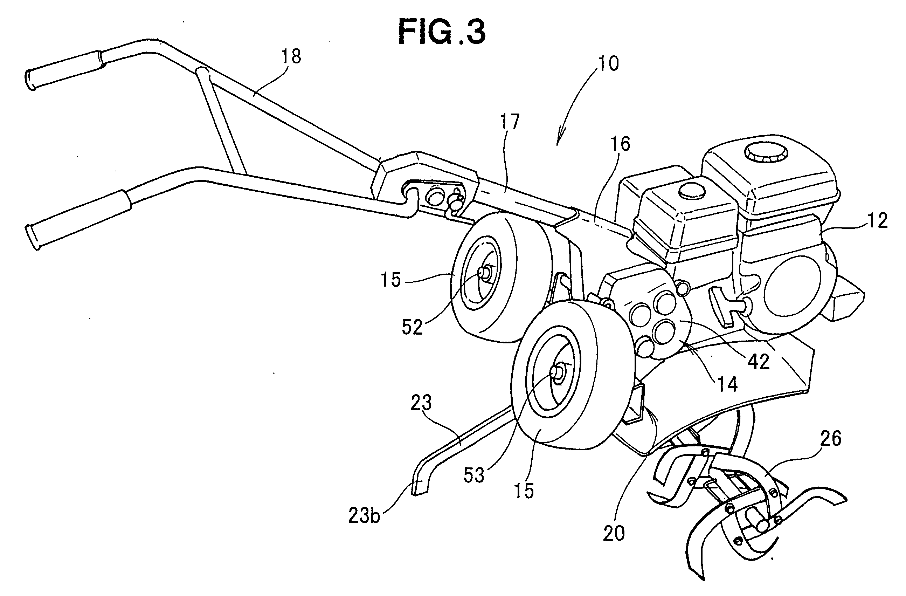

Initial reference is made to Fig. 1 which shows an embodiment of a tilling machine of the present invention with left and right wheels 15 detachably attached to drive shafts thereof so that the tilling machine 10 can be transferred to a desired place by rotation of the wheels 15. Left and right rotors 25 and 26 (left rotor 25 is shown in Fig. 2) are also detachably attachable to the drive shafts when tilling opening is to be performed as shown in Fig. 3.

As shown in Figs. 1 and 2, the tilling machine 10 includes: a machine body frame 11 extending substantially horizontally; an engine 12 mounted on a front portion 11a of the machine frame 11; a reduction gear or transmission section 14 provided on a rear portion 11b of the machine frame 11; left and right wheels 15 rotatably provided on lower end portions of the transmission section 14; a column support section 16 provided on an upper end portion of the transmission section 14; a handle column 17 extending obliquely rearwardly and upwardly from the column support section 16; and an operating handle 18 provided on an upper end portion of the handle column 17.

The tilling machine 10 further includes: a rotary/wheel support unit 20, a hitch member 22 provided on the rotary/wheel support unit 20; a skid (desired towed member) 23 connected to the hitch member 22; and the left and right rotors 25 and 26 mounted on the rotary/wheel support unit 20.

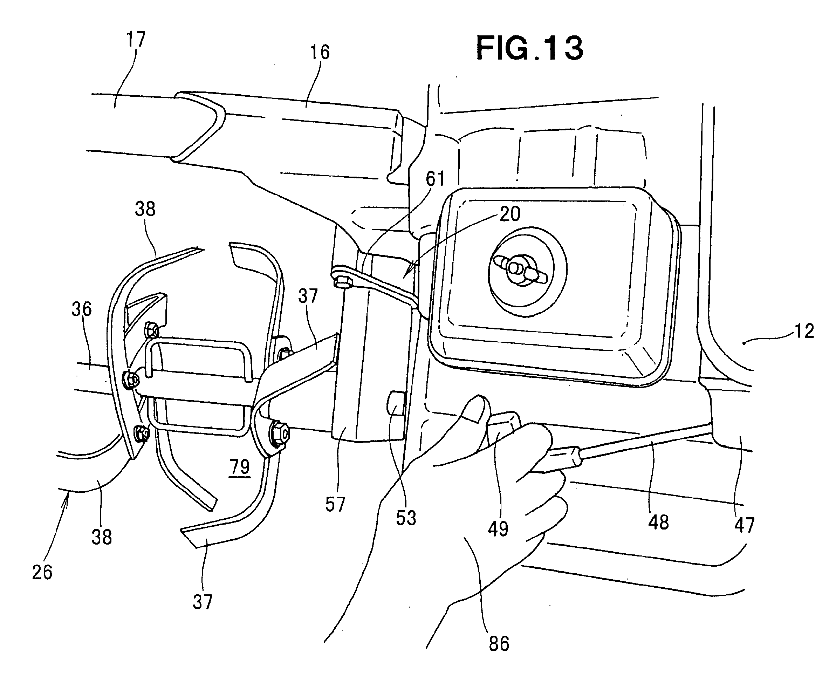

A recoil starter 47 is provided on a right side portion 12a, and a recoil knob 49 is connected to the recoil starter 47 via a cable 48 (see Fig. 13). The engine 12 can be activated by a human operator holding the recoil knob 49 to pull the cable 48 rearwardly.

The transmission section 14 includes a transmission case (machine body) 42 provided on the rear portion 11b of the machine body frame 11, and a transmission mechanism (not shown) accommodated in the transmission case 42 for reducing a rotation speed of the engine 12.

The transmission case 42 has a vertically-middle portion 42a provided on the rear portion 11b of the machine body frame 11, a substantial upper half portion extending upwardly from the machine body frame 11, and a substantial lower half portion extending downwardly from the machine body frame 11.

The column support section 16 is provided on a rear end portion 42b of the transmission case 42. The transmission mechanism is accommodated within the transmission case 42.

The transmission mechanism includes an input shaft projecting upwardly from an upper end portion of the transmission case 42 and connected to a crankshaft of the engine 12 via a pulley or belt, and drive shafts (output shafts) 44 projecting leftward and rightward in a machine body width direction from a lower end portion 42c of the transmission case 42.

The left and right drive shafts 44 projecting left and rightward from the lower end portion 42c of the transmission case 42 are each in the form of a hexagonal column, and the left and right wheels 15 and the left and right rotors 25 and 26 are detachably attachable to the left and right drive shafts 44. Fig. 1 shows the left and right drive shafts 44 having the left and right wheels 15 attached thereto.

In the transmission mechanism, rotation of the engine 12 (namely, crankshaft) is transmitted to the input shaft, and rotation of the input shaft can be transmitted to the left and right drive shafts 44 via a pulley or belt after being reduced in speed. As the left and right drive shafts 44 rotate, the left and right wheels 15 or the left and right rotors 25 and 26 rotate.

When tilling operation is to be performed, the left and right rotors 25 and 26 (the left rotor 25 is shown in Fig. 2) are rotatably attached to lower end portion of the transmission section 14 and the left and right wheels 15 are attached to the rotary/wheel support unit 20, as shown in Fig. 3.

Driving force of the engine 12 is transmitted to the left and right rotors 25 and 26 via the transmission section 14 to rotate the left and right rotors 25 and 26, so that the tiling machine 10 travels while cultivating soil by means of the left and right rotors 25 and 26. Namely, the tiling machine 10 is a walk-behind type tiling machine behind which a human operator walks while cultivating soil by means of the left and right rotors 25 and 26.

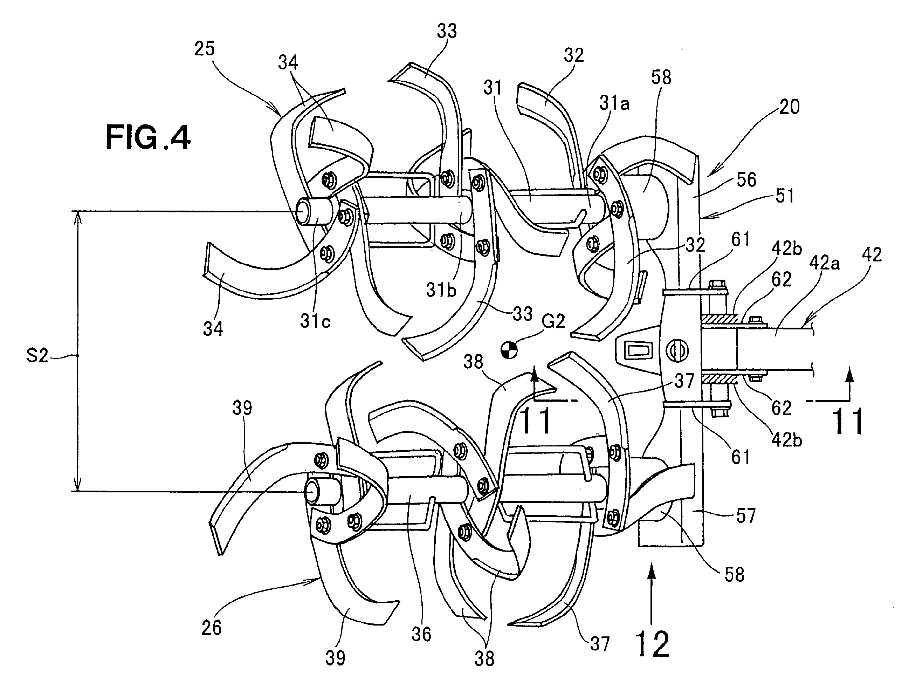

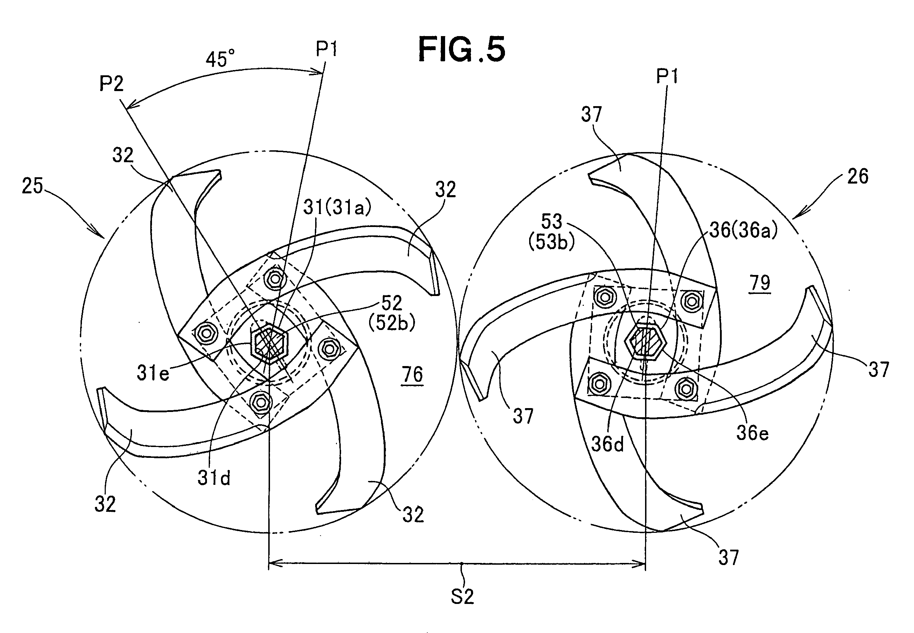

As shown in Fig. 4, the left rotor 25 includes: a left rotation shaft 31 detachably attachable to a left stud section 52 (Fig. 5) of the rotary/wheel support unit 20; a plurality of (four in the illustrated example) left front tilling claws 32 provided on a front end portion 31a of the left rotation shaft 31; a plurality of (four in the illustrated example) left middle tilling claws 33 provided on a middle portion 31b of the left rotation shaft 31; and a plurality of (four in the illustrated example) left rear tilling claws 34 provided on a rear end portion 31c of the left rotation shaft 31.

More specifically, the four left front tilling claws 32 are provided on the front end portion 31a of the left rotation shaft 31 at uniform angular intervals of 90° and project radially outwardly from the front end portion 31a, as shown in Fig. 5.

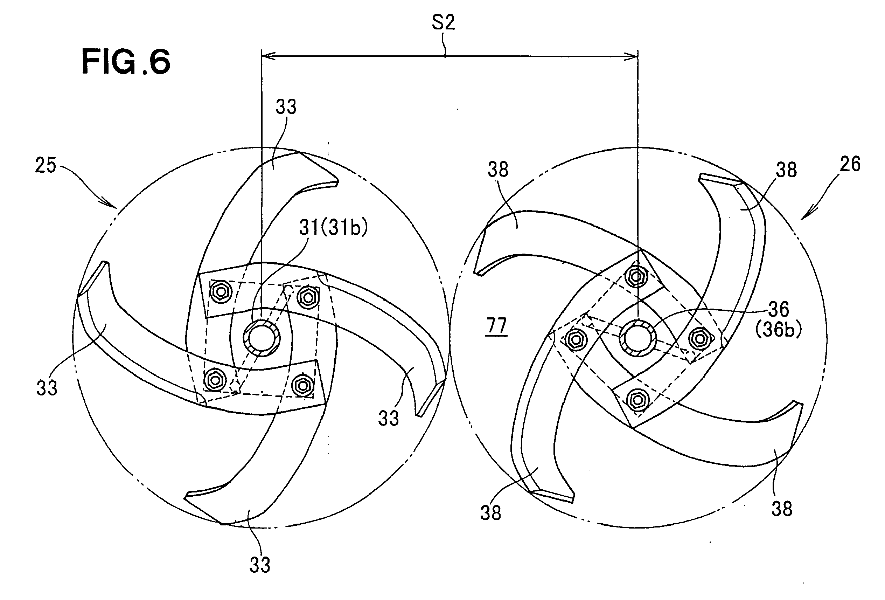

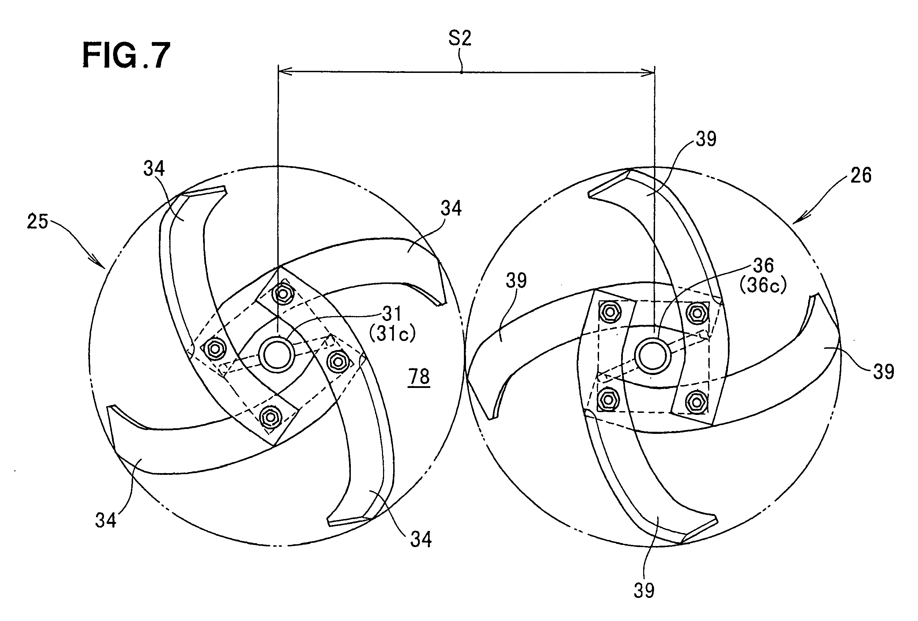

In the left rotation shaft 31, the front end portion 31a has a hole of a hexagonal cross-sectional shape corresponding to the hexagonal columnar shape of the left stud section 52, and the remaining portion has a hole of a circular cross-sectional shape (Figs. 6 and 7).

The four left middle tilling claws 33 are provided on the middle portion 31b of the left rotation shaft 31 at uniform angular intervals of 90° and project radially outwardly from the middle portion 31b, as shown in Fig. 6. Further, the four left rear tilling claws 34 are provided on the rear end portion 31c of the left rotation shaft 31 at uniform angular intervals of 90° and project radially outwardly from the rear end portion 31c, as shown in Fig. 7.

As seen in Fig. 4, the right rotor 26 is constructed in left-right symmetrical relation to the aforementioned left rotor 25. Namely, the right rotor 26 includes: a right rotation shaft 36 detachably attachable to a right stud section 53 of the rotary/wheel support unit 20; a plurality of (four in the illustrated example) right front tilling claws 37 provided on a front end portion 36a of the right rotation shaft 36; a plurality of (four in the illustrated example) right middle tilling claws 38 provided on a middle portion 36b of the right rotation shaft 36; and a plurality of (four in the illustrated example) right rear tilling claws 39 provided on a rear end portion 36c of the right rotation shaft 31.

More specifically, the four right front tilling claws 37 are provided on the front end portion 36a of the right rotation shaft 36 at uniform angular intervals of 90° and project radially outwardly from the front end portion 36a, as shown in Fig. 5.

In the right rotation shaft 36, the front end portion 36a has a hole of a hexagonal cross-sectional shape corresponding to the hexagonal columnar shape of the right stud section 53, and the remaining portion has a hole of a circular cross-sectional shape (Figs. 6 and 7).

The four right middle tilling claws 38 are provided on the middle portion 36b of the right rotation shaft 36 at uniform angular intervals of 90° and project radially outwardly from the middle portion 38, as shown in Fig. 6. Further, the four right rear tilling claws 39 are provided on the rear end portion 36c of the right rotation shaft 31 at uniform angular intervals of 90° and project radially outwardly from the rear end portion 36c, as shown in Fig. 7.

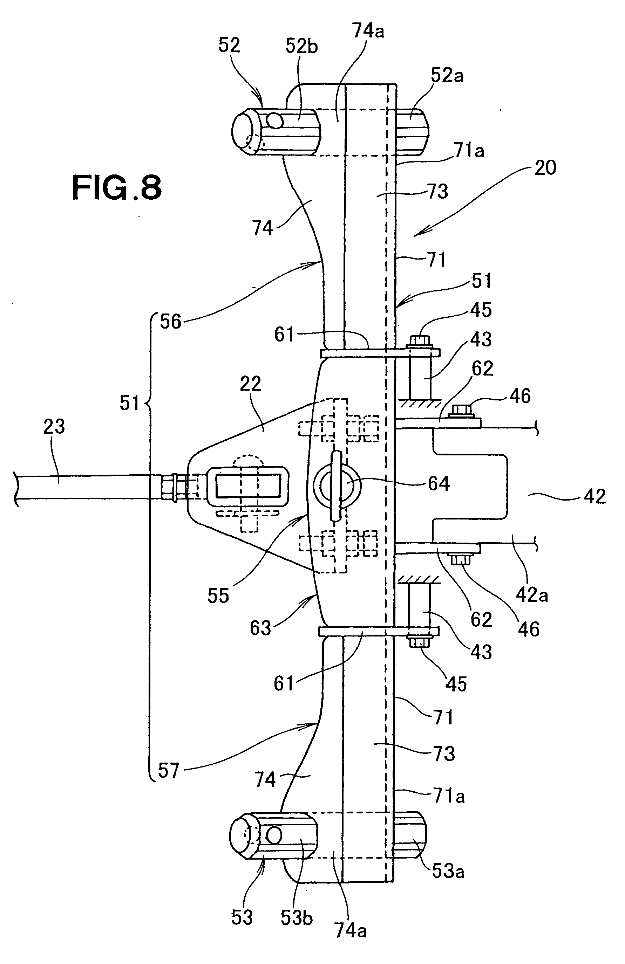

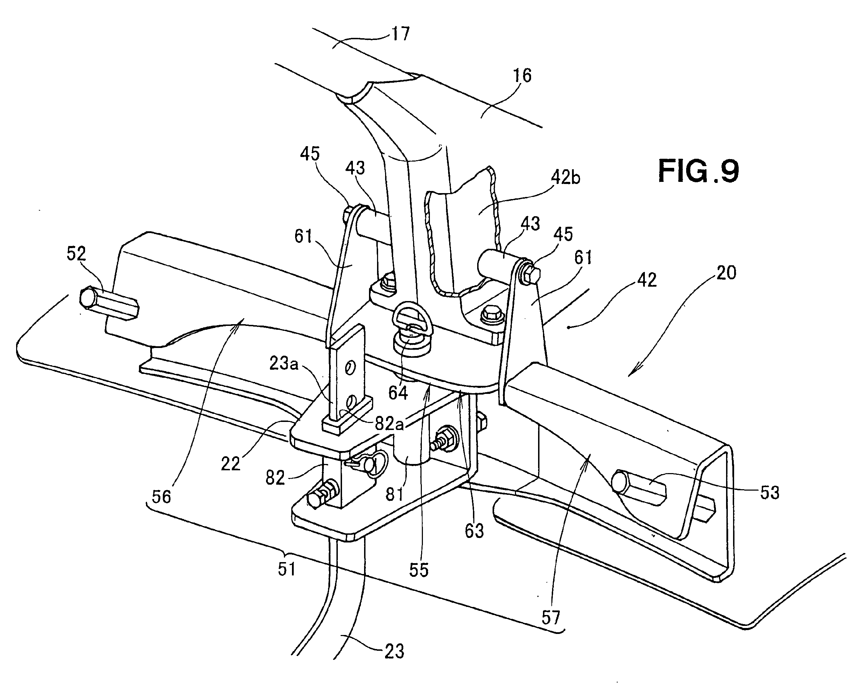

As shown in Figs. 8 and 9, the rotary/wheel support unit 20 includes a support member 51 provided on a rear upper end portion 42b of the transmission case 42 and extending in the machine body width direction, and the left and right stud sections 52 and 53 provided at left and right end portions of the support member 51.

The support member 51 is disposed beneath the handle column 17. The support member 51 integrally includes a hitch mounting section 55 provided on its middle region in the machine body width direction, a left support section 56 provided to the left of the hitch mounting section 55, and a right support section 57 provided to the right of the hitch mounting section 55. Namely, the support member 51 has a pair of left and right support sections 56 and 57 extending from left and right ends, respectively, of the hitch mounting section 55.

The hitch mounting section 55 includes: left and right upper brackets 61 provided on the rear upper end portion (rear portion of the machine body) 42b of the transmission case 32; left and right lower brackets 62 provided on a middle portion (rear portion of the machine body) 42a of the transmission case 42; a hitch mounting section body 63 provided on a rear upper end portion 42b of the transmission case 42 via the left and right upper brackets 61 and left and right lower brackets 62; and a hitch pin 64 removably inserted through the hitch mounting section body 63.

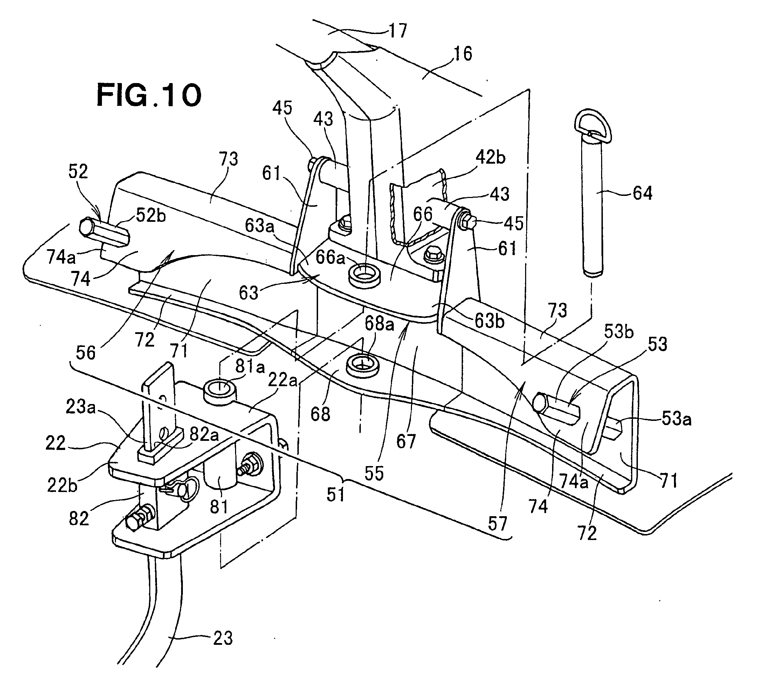

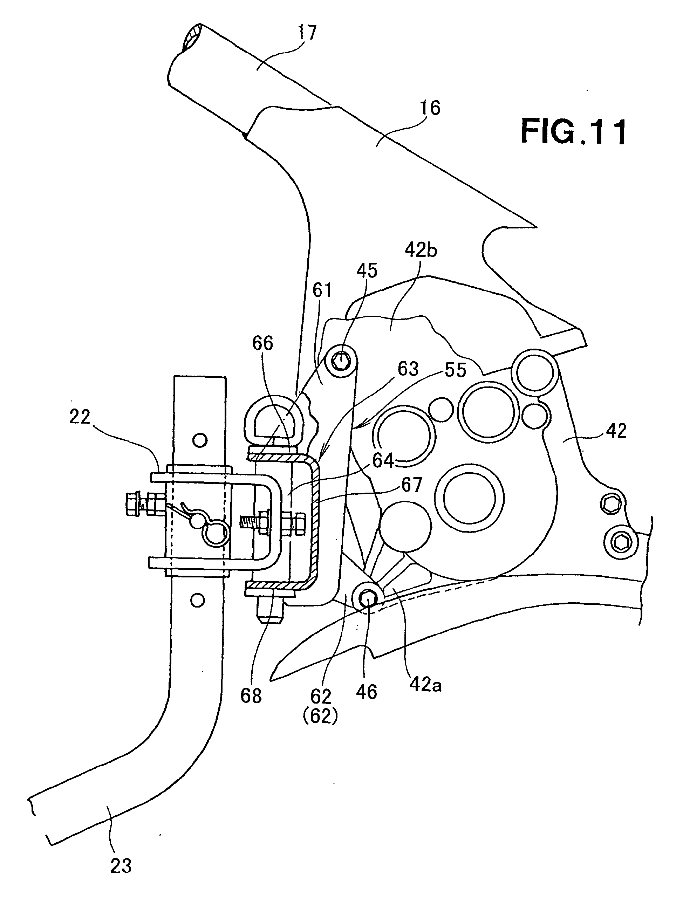

As shown in Figs. 10 and 11, the hitch mounting section body 63 includes an upper portion (hitch upper portion) 66 extending substantially horizontally, a front wall portion (hitch front wall portion) 67 bent from the front end of the upper portion 66 substantially vertically downward, and a lower portion (hitch lower portion) 68 bent from the lower end of the hitch front wall portion 67 substantially horizontally rearward. The hitch mounting section body 63 has a lateral U (or channel) sectional shape defined by the hitch upper portion 66, hitch front wall portion 67 and hitch lower portion 68.

The hitch mounting section body 63 is fixedly connected at its left upper portion to the rear upper end portion 42b of the transmission case 42 via the left upper bracket 61 and fixedly connected at its right upper portion to the rear upper end portion 42b of the transmission case 42 of via the right upper bracket 61.

The left and right brackets 61 are fastened to left and right bosses 43 of the transmission case 42 by means of bolts 45. The left and right bosses 43 are provided on the rear upper end portion 42b of the transmission case 42.

Further, the hitch mounting section body 63 is fixedly connected at its middle lower portion to the middle portion 42a of the transmission case 42 via the left and right lower brackets 62 (see Fig. 8).

The left and right lower brackets 62 are screwed to the middle portion 42a of the transmission case 42 by means of bolts 46.

The transmission case 42 is a high-rigidity (i.e., high-mechanical strength) case. The hitch mounting section body 63 can be securely fixed to the high-rigidity transmission case 42 via the left and right upper and lower brackets 62.

An upper through-hole 66a is formed in a substantial longitudinally-middle region of the hitch upper portion 66, and a lower through-hole 68a is formed in a substantial longitudinally-middle region of the lower hitch portion 68. The upper through-hole 66a and lower through-hole 68a are coaxially aligned with each other in a vertical direction, and the hitch pin 64 is removably insertable through the vertically-aligned upper through-hole 66a and lower through-hole 68a.

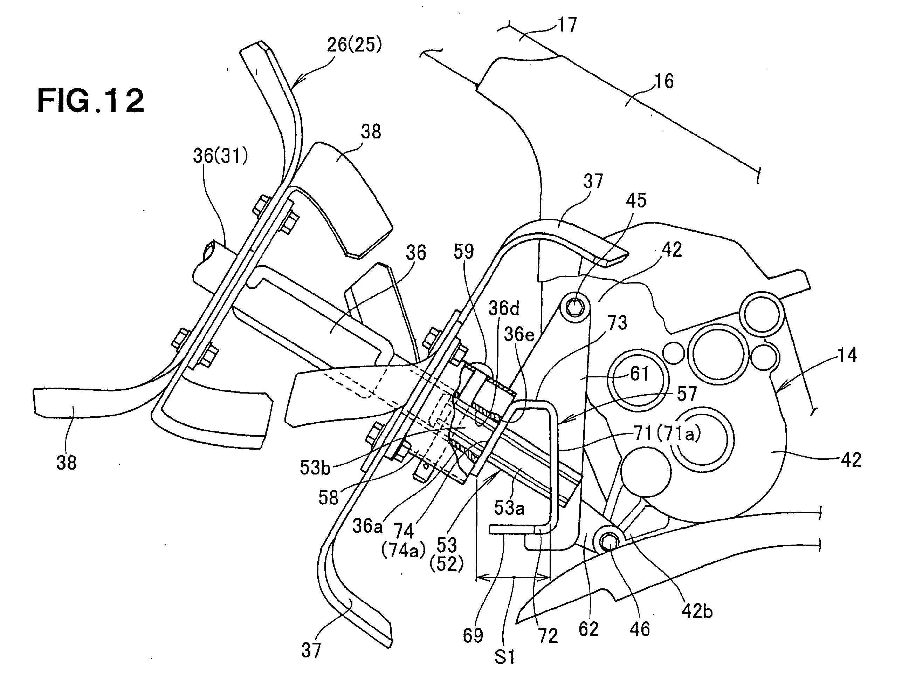

As shown in Figs. 10 and 12, the right support section 57 extends from a right end portion 63b of the hitch mounting section body 63 rightward in the machine body width direction.

The right support section 57 includes a front wall portion 71 extending substantially vertically adjacent to a rear end portion of the transmission case 42, a lower portion 72 bent substantially horizontally rearward from the lower end of the front wall portion 71, an upper portion 73 bent substantially horizontally rearward from the upper end of the front wall portion 71, and a rear wall portion 74 bent obliquely downward and rearward from the rear end of the upper portion 73.

The front wall portion 71 is securely connected to the hitch front wall portion 67 of the hitch mounting section body 63 in flush with the latter by being disposed substantially vertically similarly to the hitch front wall portion 67.

The upper portion 73 is securely connected to the hitch upper portion 66 of the hitch mounting section body 63 in flush with the latter by being disposed substantially horizontally similarly to the hitch upper portion 66.

Thus, the upper portion 73 is securely connected to the hitch upper portion 66 of the hitch mounting section body 63 via the right upper bracket 61.

The lower portion 72 is securely connected to the hitch lower portion 68 of the hitch mounting section body 63 in flush with the latter by being disposed substantially horizontally similarly to the hitch lower portion 68.

In the aforementioned manner, the right support section 57 is securely fixed to the right end portion 63b of the hitch mounting section body 63.

The rear wall portion 74 extends obliquely in a direction perpendicular to the handle column 17 and is located rearwardly of the front wall portion 71 with a predetermined interval S1 therebetween.

A base portion 53a of the right stud section 53 extends between, and supported at its opposite end regions by, a right end region 74a of the rear wall portion 74 and a right end region 71a of the front wall portion 71 (namely, supported by one of opposite end regions of the support member 51).

The right stud section 53 is in the form of a hexagonal column, which extends perpendicularly through the rear wall portion 74 in such a manner that its distal end (rear end) portion 53b extends obliquely upwardly from the rear wall portion 74 and rearwardly of the machine body (i.e., toward the human operator operating the tilling machine 10). Thus, the distal end portion 53b of the right stud section 53 extends along and in parallel to the handle column 17.

The right rotor 26 is supported on the distal end (rear end) portion 53b of the right stud section 53 by a fitting hole 36d of the right rotation shaft 36 being fitted over the distal end portion 53b of the right stud section 53.

A large-diameter cylinder member 58 is a member provided around the outer circumference of, and concentrically with, the front end portion 36a of the right rotation shaft 36, as seen in Fig. 12. The large-diameter cylinder member 58 functions to prevent grass etc. from wrapping around the right rotation shaft 36.

With the right rotor 26 supported on the distal end portion 53b of the right stud section 53, a right lock pin 59 extends through the large-diameter cylinder member 58, right rotation shaft 36 and distal end portion 53b. In this way, the right lock pin 59 can prevent the right rotation shaft 36 from pulling out of the distal end portion 53b.

The fitting hole 36d of the right rotation shaft 36 and a fitting hole 15a of the right wheel 15 are each formed in a hexagonal cross-sectional shape corresponding to the hexagonal columnar shape of the right stud section 53.

As shown in Fig. 10, the left support section 56 extends leftward in the machine body width direction from a left end portion 63a of the hitch mounting section body 63. The left support section 56 is constructed in left-right symmetrical relation to the aforementioned right support section 57, and elements of the left support section 56 similar to those of the right support section 57 are indicated by the same reference numerals and will not be described to avoid unnecessary duplication.

The left support section 56 is securely fixed to the left end portion 63a of the hitch mounting section body 63, similarly to the right support section 57.

A base portion 52a of the left stud section 52 is provided in a left end region 74a of the rear wall portion 74 and a left end region 71a of the front wall portion 71 of the left support section 56 (namely, in the other of the opposite end portions of the support member 51).

Similarly to the right stud section 53, the left stud section 52 is in the form of a hexagonal column, which extends perpendicularly through the rear wall portion 74 in such a manner that its distal end portion 52b extends obliquely upwardly from the rear wall portion 74 and rearwardly of the machine body. Thus, the distal end portion 52b of the left stud section 52 extends along and in parallel to the handle column 17.

The left rotor 25 is supported on the distal end portion 52b of the left stud section 25 by a fitting hole 31d (Fig. 5) of the left rotation shaft 31 being fitted over the distal end portion 52b of the left stud section 52.

As in the front end portion 36a of the right rotation shaft 36, a large-diameter cylinder member 58 is provided around the outer circumference of, and concentrically with, the front end portion 31a of the left rotation shaft 31, as seen in Fig. 4.

With the left rotor 26 supported on the distal end portion 52b of the left stud section 52, a left lock pin (not shown) extends through the large-diameter cylinder member 58, left rotation shaft 31 and distal end portion 52b. In this way, the left lock pin can prevent the left rotation shaft 31 from pulling out of the distal end portion 52b.

Further, the left wheel 15 is supported on the distal end portion 52b of the left stud section 52 by a fitting hole 15a of the left wheel 15 being fitted over the distal end portion 52b of the left stud section 52. In this state, the left lock pin extends through the left wheel 15 and distal end portion 52b so that the left lock pin can prevent the left wheel 15 from pulling out of the distal end portion 52b.

The fitting hole 31d of the left rotation shaft 31 and the fitting hole 15a of the right wheel 15 are each formed in a hexagonal cross-sectional shape corresponding to the hexagonal columnar shape of the left stud section 52.

As shown in Figs. 10 and 12, the rear wall portion 74 and front wall portion 71 of the right support section 57 are spaced from each other by a predetermined interval S1, and the base portion 53a of the right stud section 53 is supported at its opposite end regions by two portions, i.e. by the rear wall portion 74 and front wall portion 71. Similarly, the rear wall portion 74 and front wall portion 71 of the left support section 56 are spaced from each other by a predetermined interval S1, and the base portion 52a of the left stud section 52 is supported at its opposite end regions by two portions, i.e. by the rear wall portion 74 and front wall portion 71.

Thus, the base portion 52a of the left stud section 52 can be securely supported by the left support section 56, while the base portion 53a of the right stud section 53 can be securely supported by the right support section 57. In this way, the left rotor 25 can be supported stably by the left support section 56, while the right rotor 26 can be supported stably by the right support section 57.

Further, the rear wall portions 74 of the right support section 57 and left support section 56 are provided perpendicularly to the handle column 17.

Thus, with the fitting hole 36d of the right rotation shaft 36 fitted over the distal end portion 53b of the right stud section 53, the entire end surface of the end portion 36e of the right rotation shaft 36 can be held in abutment against the rear wall portion 74 of the right support section 56, so that the right rotor 26 can be supported stably in a direction parallel to the handle column 17.

Similarly, with the fitting hole 31d of the left rotation shaft 31 fitted over the distal end portion 52b of the left stud section 52, the entire end surface of the end portion 31e of the left rotation shaft 31 can be held in abutment against the rear wall portion 74 of the left support section 52, so that the left rotor 25 can be supported stably in a direction parallel to the handle column 17.

As shown in Fig. 5, the left stud section 52 and the right stud section 53 are each in the form of a hexagonal column. Further, a reference position P2 of the left stud section 52 is phase-shifted by 45° from a reference position P1 of the right stud position 53.

Further, in the state where the fitting hole 31d of the left rotor 25 (left rotation shaft 31) is held fitted over the distal end portion 52b of the left stud section 52 and the fitting hole 36d of the right rotor 26 (right rotation shaft 36) is held fitted over the distal end portion 53b of the right stud section 53, the left rotor 25 and the right rotor 26 are phase-shifted from each other by 45° .

As noted above, the left rotor 25 has the four left front tilling claws 32 provided on the front end portion 31a of the left rotation shaft 31 at uniform angular intervals of 90° and projecting radially outwardly from the front end portion 31a; namely, the four left front tilling claws 32 project radially outwardly from the front end portion 31a of the left rotation shaft 31 at 90° uniform angular intervals from one another. Further, the right rotor 26 has the four right front tilling claws 37 provided on the front end portion 36a of the right rotation shaft 37 at uniform angular intervals of 90° and projecting radially outwardly from the front end portion 36a; namely, the four right front tilling claws 37 project radially outwardly from the front end portion 36a of the right rotation shaft 37 at 90° uniform angular intervals from one another.. Because the left rotor 25 and the right rotor 26 are phase-shifted from each other by 45° , the right front tilling claws 37 can be located in front spaces 76 between the left front tilling claws 32, and thus, it is possible to avoid interference between the left front tilling claws 32 and the right front tilling claws 37.

Further, because the left rotor 25 and the right rotor 26 are phase-shifted from each other by 45° , the left middle tilling claws 33 can be located in middle spaces 77 between the right middle tilling claws 38 as shown in Fig. 6, and thus, it is possible to avoid interference between the left middle tilling claws 33 and the right middle tilling claws 38. Furthermore, the right rear tilling claws 39 can be located in rear spaces 78 between the left rear tilling claws 34 as shown in Fig. 7, and thus, it is possible to avoid interference between the left rear tilling claws 34 and the right rear tilling claws 39.

By avoiding interference between the individual tilling claws 32, 33 and 34 of the left rotor 25 and the individual tilling claws 37, 38 and 39 of the right rotor 26, the instant embodiment permits reduction in an interval S2 between the left rotor 25 and the right rotor 26; namely, the instant embodiment allows the left and right rotors 25 and 26 to be disposed compactly in the machine body direction.

Because the left and right rotors 25 and 26 can be disposed compactly in the machine body direction, the left rotor 25 can be located closer to the center of the machine body than an outer side portion 83a of a left fender 83, and the right rotor 26 can be located closer to the center of the machine body than an outer side portion 84a of a right fender 84.

In this manner, the left and right rotors 25 and 26 can be appropriately supported by the rotary/wheel support unit 20 without the overall with of the tilling machine 10 being increased.

As shown in Figs. 5 and 13, two of the four right front tilling claws 37 extend upward and rearward, respectively, and the remaining two of the four right front tilling claws 37 extend leftward (inwardly of the machine body) and rearward (outwardly of the machine body), respectively.

Thus, a front outer space 79 is formed between the upward-extending right front tilling claws 37 and the rightward-extending right front tilling claws 37. The recoil knob 49 of the recoil starter 47 is disposed in front of the front outer space 79. The engine 12 can be activated by the human operator holding the recoil knob 49 to pull the cable 48 rearward.

As shown in Figs. 9 and 10, the hitch member 22 is provided on the rotary/wheel support unit 20. The hitch member 22 has a lateral U (or channel) sectional shape as viewed sideways, and it has a support cylinder 81 on its front end portion 22a and a mounting bracket 22b on its rear end portion 22b. The support cylinder 81 extends coaxially with and between an upper through-hole 66a and a lower through-hole 68a.

The hitch pin 64 extends through the upper through-hole 66a, through-hole 81a of the support cylinder 81 and lower through-hole 68a, so that the hitch member 22 is connected to the hitch mounting section body 63 via the hitch pin 64 in such a manner that it is horizontally pivotable.

An upper end portion 23a of the skid 23 is mounted to a mounting bracket 82 by being inserted into a mounting hole 82a of the mounting bracket 81.

As shown in Fig. 3, a lower end portion 23a of the skid 23 enters soil when the tilling machine 10 cultivates the soil by means of the left and right rotors 25 and 26 (see Fig. 2 for the left rotor 25). By the lower end portion 23a of the skid 23 entering the soil, a tilling depth of the left right rotors 25 and 26 can be kept constant.

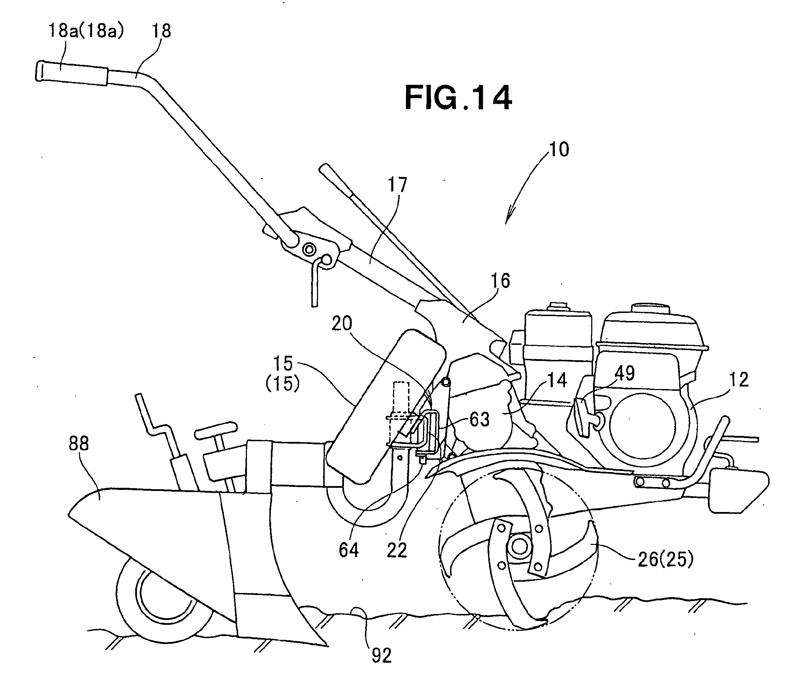

In an illustrated example of Fig. 14, the tilling machine 10 includes the left and right rotors 25 and 26 attached to the lower end portion of the transmission section 14, and the left and right wheels 15 attached to the rotary/wheel support unit 20. Further, a ridger (desired towed member) 88 is attached to the hitch member 22 in place of the skid 23. With the ridger 88 attached to the hitch member 22, the tilling machine 10 can perform furrowing operation while cultivating soil 92 with the left and right rotors 25 and 26.

As shown in Fig. 3 or 14, the skid 22 or ridger 88 is mounted to the hitch member 22 as necessary. A load applied to the hitch member 22 by way of the skid 22 or ridger 88 acts on the hitch mounting section body 63 via the hitch pin 64. Thus, as shown in Fig. 8, the hitch mounting section body 63 is connected to the transmission case 42 via the left and right upper brackets 61 and left and right lower brackets 62.

Because the transmission case 42 is a high-rigidity (i.e., high-mechanical strength) case, the hitch mounting section body 63 can be securely supported by being securely fixed to the high-rigidity transmission case 42.

The left and right support sections 56 and 57 are provided on the hitch mounting section body 63, and the left and right stud sections 52 and 53 are provided on the left and right support sections 56 and 57, respectively.

As shown in Figs. 4 and 8, the left support section 56 and left stud section 52 and the right support section 57 and right stud section 53 are securely supported on the transmission case 42 with a simple construction, using the hitch mounting section body 63. In this way, the right rotor 26 can be supported stably on the distal end portion 53b of the right stud section 53, while the left rotor 25 can be supported stably on the distal end portion 52b of the left stud section 52.

In the instant embodiment of the tilling machine 10 of the present invention, the support member 51 is supported on the middle portion 42a and rear upper end portion 42b of the transmission case 41 via the left and right upper brackets 61 and left and right lower brackets 62.

Further, the distal end portion 53b of the right stud section 53 extends from the right end portion of the support member 51 rearwardly of the machine body along the handle column 17. Similarly, the distal end portion 52b of the left stud section 52 extends from the left end portion of the support member 51 rearwardly of the machine body along the handle column 17. Further, the right rotation shaft 36 of the right rotor 26 is fitted over the distal end portion 53b of the right stud section 53, and the left rotation shaft 31 of the left rotor 25 is fitted over the distal end portion 52b of the left stud section 52.

In the aforementioned manner, the left and right rotors 25 and 26 can be provided close to the rear end of the transmission case 42, and thus, the center-of-gravity position G2 of the left and right rotors 25 and 26 can be located closer to the center-of-gravity position G1 (Fig. 2) of the tilling machine 10.

Thus, the handle lifting load imposed on the human operator when lifting the operating handle 18 (left and right grips 18a) to a machine-transferring position can be reduced; therefore, no great burden will be imposed on the human operator during long-distance transfer of the tilling machine 10.

Further, as shown in Fig. 9, the left and right stud sections 52 and 53 extend rearwardly of the machine body along the handle column 17, and the right rotation shaft 36 of the right rotor 26 is fitted over the right stud section 53, and the left rotation shaft 31 of the left rotor 25 is fitted over the left stud section 52. Thus, the left and right rotors 25 and 26 can be disposed along and beneath the handle column 17 as shown in Fig. 1. As a result, it is possible to achieve a compact size of the tilling machine 10.

Furthermore, as shown in Figs. 4 and 8, the left support section 56 and left stud section 52 and the right support section 57 and right stud section 53 are securely supported on the transmission case 42 with a simple construction, using the hitch mounting section body 63 of the hitch member 22. In this way, the right rotor 26 can be supported stably on the distal end portion 53b of the right stud section 53, while the left rotor 25 can be supported stably on the distal end portion 52b of the left stud section 52.

It should be appreciated that the tilling machine of the present invention is not limited to the above-described embodiment and may be modified variously.

For example, whereas the embodiment has been described above in relation to the case where part of the support member 51 is used as the hitch mounting section 55, the support member 51 may be constructed without part of the support member 51 being used as the hitch mounting section 55. In such a case too, the same advantageous benefits as achieved by the above-described embodiment are achievable by the support member 51 being provided on the high-rigidity (high-mechanical-strength) transmission case 42.

Furthermore, whereas the embodiment has been described above in relation to the case where the left stud section 52 and the right stud section 53 are each in the form of a hexagonal column, the present invention is not so limited, and the left and right stud sections 52 and 53 may be in the form of a circular column or any other polygonal column having a polygonal cross-sectional shape, such as a rectangular or octagonal cross-sectional shape (i.e., rectangular or octagonal column). Alternatively, the left and right stud sections 52 and 53 may be in the form of a circular cylinder or any other polygonal cylinder.

Furthermore, the shapes and constructions of the hitch member 22, left and right rotors 25 and 26, left and right rotation shafts 31 and 36, left and right tilling claws 32 - 34 and 37 - 39, transmission case 42, support member 51, left and right stud sections 52 and 53, hitch mounting section 55, left and right support sections 56 and 57, front and rear wall portions 71 and 74, ridger 88, etc. are not limited to those shown and described above and may be modified as necessary.

The basic principles of the present invention are well suited for application to tilling machines which include drive shafts projecting leftward and rightward from a lower portion of a machine body and in which rotors and wheels are detachably attachable to the projecting drive shafts.

Drive shafts (44) of a tilling machine project from a machine body (42) leftward and rightward in a machine body width direction, rotation shafts (31, 36) of rotors (25, 26) being detachably attachable to the drive shafts. The tilling machine also includes: a support member (51) provided on a rear portion of the machine body under a handle column (17) extending rearwardly from the machine body, and extending in the width direction; and a pair of left and right stud sections (52, 53) extending from left and right end portions of the support member rearwardly of the machine body along the handle column, the rotation shafts of the rotors being fittable over the left and right stud sections.

## Claims

1. A tilling machine (10) which includes drive shafts (44) projecting from a lower portion of a machine body (42) leftward and rightward in a machine body width direction, and a handle column (17) extending rearwardly from a rear portion of the machine body, and in which rotation shafts (31, 36) of rotors (25, 26) are detachably attachable to the drive shafts, the tilling machine comprising:
a support member (20, 51) provided on a rear portion of the machine body under the handle column and extending in the machine body width direction; and
a pair of stud sections (52, 53) extending from left and right end portions, respectively, of the support member (20, 51), the rotation shafts (31, 36) of the rotors being fittable over corresponding ones of the stud sections (52, 53),
**characterized in that** the pair of stud sections (52, 53) extend rearwardly of the machine body (42) along and beneath and in parallel the handle column (17).

2. The tilling machine of claim 1,
wherein the support member (51) includes:
a hitch mounting section (55) provided on a rear portion of the machine body beneath the handle column;
a pair of support sections (56, 57) extending from the hitch mounting section (55) leftward and rightward in the machine body width direction; and
a hitch member (22) provided on the hitch mounting section and capable of connecting thereto a desired towed member (23, 88),
the one (52) of the stud sections being provided on the one (56) of the support sections, and the other (53) of the stud sections being provided on the other (57) of the support sections.

3. The tilling machine of claim 2,
wherein each of the support sections (56, 57) includes a front wall portion (71) located adjacent to a rear end of the machine body, and a rear wall portion (74) provided perpendicularly to the handle column (17) and spaced rearwardly from the front wall portion (71) by a predetermined interval (S1), and
wherein each of the stud sections (52, 53) is supported by the front wall portion (71) and the rear wall portion (74).

4. The tilling machine according to any one of claims 1 to 3,
wherein a plurality of tilling claws (32 - 34, 37 - 39) are provided at predetermined uniform angular intervals on the rotation shaft (31, 36) of each of the rotors and project radially outwardly from the rotation shaft, each of the stud sections (52, 53) is in a form of a polygonal column, each of the rotation shafts (31, 36) fittable over the stud sections having a fitting hole (31d, 36d) of a polygonal cross-sectional shape corresponding to the polygonal column, and
the stud sections (52, 53) are provided in phase-shifted relation to each other so that the tilling claws (32 - 34) of the rotor fitted over one of the stud sections are disposed in such positions as to avoid interference with the tilling claws (37 - 39) of the rotor fitted over the other of the stud sections.

## Patentansprüche

1. Fräsmaschine (10), die Antriebswellen (44) enthält, die von einem unteren Abschnitt eines Maschinenkörpers (42) in Maschinenkörperbreitenrichtung nach links und rechts vorstehen; sowie eine Lenksäule (17), die sich von einem hinteren Abschnitt des Maschinenkörpers nach hinten erstreckt, und worin Drehwellen (31, 36) von Rotoren (25, 26) an den Antriebswellen abnehmbar anbringbar sind, wobei die Fräsmaschine umfasst:
ein Trägerelement (20, 51), das an einem hinteren Abschnitt des Maschinenkörpers unter der Längssäule vorgesehen ist und sich in der Maschinenkörperbreitenrichtung erstreckt; und
ein Paar von Stutzenabschnitten (52, 53), die sich jeweils von linken und rechten Endabschnitten des Trägerelements (20, 51) erstrecken, wobei die Drehwellen (31, 36) der Rotoren auf entsprechende der Stutzenabschnitte (52, 53) aufsetzbar sind,
**dadurch gekennzeichnet, dass** sich das Paar von Stutzenabschnitten (52, 53) hinter dem Maschinenkörper (42) entlang und unterhalb der und parallel zur Lenksäule (17) erstreckt.

2. Die Fräsmaschine von Anspruch 1, worin das Trägerelement (51) enthält:
einen Kupplunglagerungsabschnitt (55), der an einem hinteren Abschnitt des Maschinenkörpers unterhalb der Längssäule vorgesehen ist;
ein Paar von Trägerabschnitten (56, 57), die sich von dem Kupplungslagerungsabschnitt (55) in der Maschinenkörperbreitenrichtung nach links und rechts erstrecken; und
ein Kupplungselement (22), das an dem Kupplungslagerungsabschnitt vorgesehen ist und mit dem ein gewünschtes gezogenes Element (23, 88) verbindbar ist,
wobei einer (52) der Stutzenabschnitte an dem einen (56) der Trägerabschnitte vorgesehen ist, und der andere (53) der Stutzenabschnitte an dem anderen (57) der Trägerabschnitte vorgesehen ist.

3. Die Fräsmaschine von Anspruch 2, worin jeder der Trägerabschnitte (56, 57) einen vorderen Wandabschnitt (71) enthält, der benachbart einem Hinterende des Maschinenkörpers angeordnet ist, sowie einen hinteren Wandabschnitt (74), der senkrecht zur Lenksäule (17) vorgesehen ist und um ein vorbestimmtes Intervall (S1) mit Abstand hinter dem vorderen Wandabschnitt (71) angeordnet ist, und
worin jeder der Stutzenabschnitte (52, 53) an dem vorderen Wandabschnitt (71) und dem hinteren Wandabschnitt (74) gelagert ist.

4. Die Fräsmaschine nach einem der Ansprüche 1 bis 3,
worin eine Mehrzahl von Fräsklauen (32 - 34, 37 - 39) mit vorbestimmten gleichmäßigen Winkelintervallen an der Drehwelle (31, 36) jedes der Rotoren vorgesehen sind und von der Drehwelle radial auswärts vorstehen, wobei jeder der Stutzenabschnitte (52, 53) die Form einer polygonalen Säule hat, wobei jede der Drehwellen (31, 36) auf die Stutzenabschnitte aufsetzbar ist, die ein Einsetzloch (31 d, 36d) mit polygonaler Querschnittsform entsprechend der polygonalen Säule aufweisen, und
wobei die Stutzenabschnitte (52, 53) in einer zueinander phasenverschobenen Beziehung vorgesehen sind, so dass die Fräsklauen (32 - 34) des auf einen der Stutzenabschnitte aufgesetzten Rotors an solchen Positionen angeordnet sind, dass eine Störung mit den Fräsklauen (37 - 39) des auf den anderen der Stutzenabschnitte aufgesetzten Rotors vermieden wird.

## Revendications

1. Machine de labourage (10) qui comprend des arbres d'entraînement (44) faisant saillie d'une partie inférieure d'un corps de machine (42) vers la gauche et vers la droite dans le sens de la largeur du corps de machine, et une colonne de direction (17) s'étendant vers l'arrière à partir d'une partie arrière du corps de machine, et dans laquelle les arbres de rotation (31, 36) des rotors (25, 26) peuvent être fixés de manière détachable aux arbres d'entraînement, la machine de labourage comprenant :
un élément de support (20, 51) prévu sur une partie arrière du corps de machine sous la colonne de direction et s'étendant dans le sens de la largeur du corps de la machine ; et
une paire de sections de goujon (52, 53) s'étendant à partir des parties d'extrémité gauche et droite, respectivement, de l'élément de support (20, 51), les arbres de rotation (31, 36) des rotors pouvant être montés sur des sections correspondantes des sections de goujon (52, 53),
**caractérisée en ce que** la paire de sections de goujon (52, 53) s'étend vers l'arrière du corps de machine (42) le long de et au-dessous et parallèlement à la colonne de direction (17).

2. Machine de labourage selon la revendication 1, dans laquelle l'élément de support (51) comprend :
une section de montage d'attelage (55) prévue sur une partie arrière du corps de machine au-dessous de la colonne de direction ;
une paire de sections de support (56, 57) s'étendant à partir de la section de montage d'attelage (55) vers la gauche et vers la droite dans le sens de la largeur du corps de la machine ; et
un élément d'attelage (22) prévu sur la section de montage d'attelage et capable d'y raccorder un élément remorqué (23, 88) souhaité,
l'une (52) des sections de goujon étant prévue sur l'une (56) des sections de support, et l'autre (53) des sections de goujon étant prévue sur l'autre (57) des sections de support.

3. Machine de labourage selon la revendication 2,
dans laquelle chacune des sections de support (56, 57) comprend une partie de paroi avant (71) positionnée de manière adjacente à une extrémité arrière du corps de machine, et une partie de paroi arrière (74) prévue perpendiculairement à la colonne de direction (17) et espacée vers l'arrière par rapport à la partie de paroi avant (71) par un intervalle prédéterminé (S1), et
dans laquelle chacune des sections de goujon (52, 53) est supportée par la partie de paroi avant (71) et la partie de paroi arrière (74).

4. Machine de labourage selon l'une quelconque des revendications 1 à 3,
dans laquelle une pluralité de griffes de labourage (32 - 34, 37 - 39) sont prévues à intervalles angulaires uniformes prédéterminés sur l'arbre de rotation (31, 36) de chacun des rotors et font saillie radialement vers l'extérieur à partir de l'arbre de rotation, chacune des sections de goujon (52, 53) se présente sous la forme d'une colonne polygonale, chacun des arbres de rotation (31, 36) pouvant s'ajuster sur les sections de goujon ayant un trou d'ajustement (31d, 36d) de forme transversale polygonale correspondant à la colonne polygonale, et
les sections de goujon (52, 53) sont prévues en relation déphasée entre elles de sorte que les griffes de labourage (32 - 34) du rotor montées sur l'une des sections de goujon, sont disposées dans des positions telles qu'elles évitent l'interférence avec les griffes de labourage (37 - 39) du rotor montées sur l'autre des sections de goujon.
